# FASCICULE DE BREVET EUROPEEN

(11) **EP 0 745 778 B1**
(45) Date de publication et mention de la délivrance du brevet: **09.10.2002**
(21) Numéro de dépôt: 96401062.3
(22) Date de dépôt: 14.05.1996
(51) Int. Cl.: F16C 19/52, G01P 3/44

(54) **Roulement équipé d'un dispositif intégré de détection de la vitesse de rotation**
Lager mit integrierter Geschwindigkeitsmessvorrichtung
Bearing with integrated speed-sensing device

(30) Priorité: 30.05.1995 FR 9506376
(43) Date de publication de la demande: 04.12.1996
(73) Titulaire: SKF FRANCE, F-92140 Clamart (FR)
(72) Inventeur: Rigaux, Christian, 37260 Artannes-sur-Indre (FR); Caillault, Claude, 37900 Saint-Roch (FR); Houdayer, Christophe, 3700 Tours (FR)
(74) Mandataire: Casalonga, Axel

(56) Documents cités:
- EP-A- 0 397 309
- DE-A- 3 817 175
- US-A- 4 969 753
- US-A- 5 121 998
- US-A- 5 183 341

## Description

L'invention concerne les roulements à deux rangées d'éléments roulants entre une bague extérieure et deux bagues intérieures, munis de dispositifs intégrés de détection de la vitesse de rotation, par exemple les roulements de roues de véhicules automobiles couplés à un système antiblocage de roues.

L'invention concerne en particulier les roulements munis d'un capteur solidaire de la bague extérieure et d'un codeur disposés entre les deux rangées d'éléments roulants, le codeur assurant en outre la retenue axiale des bagues intérieures du roulement entre le moment où le roulement est assemblé et le moment où le roulement est monté dans l'ensemble mécanique auquel il est destiné, par exemple un moyeu de roue de véhicule.

On connaît, par le brevet américain n° 5121998, un roulement comprenant une bague extérieure fixe, deux bagues intérieures tournantes, deux rangées de rouleaux maintenus par des cages, un capteur logé dans un trou radial de la bague fixe et faisant saillie dans l'espace entre les rouleaux et les bagues intérieures et extérieure, et un codeur monté sur les deux bagues intérieures. Le codeur se compose d'une pièce annulaire munie de fenêtres séparées par des barrettes et de deux rangées de griffes afin de retenir axialement les bagues intérieures lors des manipulations du roulement avant son montage définitif. Ce type de codeur fonctionne généralement avec un capteur inductif composé d'un bobinage enroulé sur un noyau aimanté.

Un inconvénient de ce type de roulement est que le codeur à fenêtres, réalisé en matériau magnétique, par exemple en tôle d'acier, est en contact avec des portées cylindriques des bagues intérieures elles-mêmes réalisées en un matériau magnétique. Or, la qualité du signal obtenu dans le capteur ne sera bonne que s'il existe des discontinuités de matière magnétique suffisantes entre le passage d'une barrette et le passage d'une fenêtre en regard du capteur.

Dans de tels dispositifs, ceci ne peut donc être obtenu que grâce à un codeur réalisé en tôle relativement épaisse, ce qui présente des inconvénients liés au poids et au coût de fabrication.

Les dispositifs utilisant un codeur monobloc réalisé à partir d'un seul matériau peuvent présenter d'autres inconvénients.

C'est ainsi que si l'on veut utiliser comme codeur une bague munie de dents radiales réalisée en métal fritté, il n'est pas possible d'envisager des moyens de retenue tels que des griffes issus directement du codeur du fait du peu d'élasticité de ce matériau.

On se heurte aux mêmes difficultés si l'on veut utiliser comme codeur un anneau multipoles en ferrite ou en plastoferrite à fort taux de ferrite.

Par ailleurs, un tel dispositif n'est pas utilisable dans un roulement à billes, car, lors de l'opération d'assemblage des bagues intérieures et du codeur, en particulier lors de l'introduction de la deuxième bague intérieure sur l'ensemble constitué par la première bague intérieure et le codeur, les faces des éléments roulants de la première bague intérieure et le codeur peuvent venir en contact. Une telle caractéristique présente un inconvénient majeur pour un roulement à billes, dans la mesure où une rayure ou une marque sur une bille occasionnée par les griffes du codeur lors de l'opération d'assemblage peut avoir une incidence importante sur le bon fonctionnement ultérieur du roulement.

L'invention a donc pour objet un roulement muni d'un dispositif intégré de détection de la vitesse de rotation remédiant aux inconvénients précités et plus particulièrement un roulement à billes muni d'un tel dispositif.

Un autre objet de l'invention est de réaliser un roulement dont le codeur soit isolé des bagues intérieures par un support amagnétique.

Un autre objet de l'invention est de réaliser un roulement dont le support du codeur est capable de retenir axialement les deux bagues intérieures.

Un autre objet de l'invention est de réaliser un roulement dont les bagues intérieures comprennent une butée axiale capable d'empêcher le codeur de venir au contact des éléments roulants lors de l'assemblage du roulement.

Selon l'invention, le roulement comprend au moins une bague extérieure, deux bagues intérieures, deux rangées d'éléments roulants maintenus par des cages et un dispositif intégré de détection de la vitesse de rotation du type comprenant un moyen capteur et un moyen codeur disposés dans la chambre annulaire définie entre les bagues intérieures et extérieure et les éléments roulants. Le moyen codeur comprend une partie active capable de créer dans le moyen capteur un signal périodique de fréquence proportionnelle à la vitesse de rotation du roulement. Le moyen codeur comprend une partie de support solidaire des bagues intérieures et isolant magnetiquement les bagues interieures de la partie active du codeur, réalisée en matériau amagnétique, de façon que la partie de support retienne axialement les bagues intérieures l'une contre l'autre avant montage du roulement dans l'ensemble mécanique auquel il est destiné.

Grâce à l'invention, on peut donc réaliser la partie active du codeur sous plusieurs formes et à partir de plusieurs sortes de matériaux tout en conservant toujours un bon signal au niveau du moyen capteur.

On peut, d'autre part, réaliser sans problème la solidarisation axiale des bagues intérieures du roulement par l'intermédiaire de la partie support du codeur.

L'invention est spécialement applicable au cas des roulements à billes.

Dans un mode de réalisation de l'invention, les bagues intérieures comprennent des zones de retenue coopérant avec la partie de support du moyen codeur.

Dans un mode de réalisation de l'invention, la partie de support du moyen codeur comprend des moyens de retenue axiale capables de coopérer avec une rainure annulaire prévue sur chaque bague intérieure du roulement. Avantageusement, les moyens de retenue sont disposés aux extrémités axiales de la partie de support du moyen codeur.

Dans un mode de réalisation de l'invention, les moyens de retenue comprennent chacun une rangée de dents ou une nervure annulaire.

Dans un mode de réalisation de l'invention, chaque bague intérieure comprend une nervure annulaire disposée au fond de la rainure, à proximité de la surface frontale de la bague intérieure et pourvue d'une portion sensiblement radiale sur sa face opposée à la face frontale de la bague intérieure, capable de coopérer avec les moyens de retenue de la partie de support du moyen codeur.

Dans un mode de réalisation de l'invention, chaque rainure annulaire d'une bague intérieure comprend une surface d'appui disposée entre le fond de la rainure et le bord de la rainure proche des éléments roulants de façon à former une butée axiale du moyen codeur lors de la mise en place de la deuxième bague intérieure au contact de la première bague intérieure et du moyen codeur.

Dans une variante, les bagues intérieures comprennent un épaulement supplémentaire sur le bord de la rainure proche des éléments roulants, destiné à coopérer avec une portion radiale de la partie active du moyen codeur.

Dans un mode de réalisation de l'invention, les moyens de retenue axiale de la partie de support du moyen codeur comprennent des pattes élastiques orientées axialement, alternées et munies à chacune de leurs extrémités libres d'une protubérance destinée à coopérer avec les rainures annulaires des bagues intérieures.

Avantageusement, la partie active du moyen codeur peut être recouverte par la matière synthétique de la partie de support.

Dans un mode de réalisation de l'invention, la partie active du moyen codeur est munie d'une section en U, les branches latérales du U entourant exialement la partie de support du moyen codeur et la portion centrale du U étant disposée en face du moyen capteur.

Dans une variante, le moyen codeur comprend un élément annulaire supplémentaire à section en L, disposé à l'intérieur de la partie active à section en U et réalisé en matériau amagnétique, comprenant une branche radiale et une branche axiale disposée entre la portion centrale de la partie active du moyen codeur et les bagues intérieures, et séparée de la portion centrale de la partie active par une couche d'élastomère surmoulé. Un tel élément annulaire supplémentaire est destiné à améliorer la qualité du signal dans le moyen capteur et la rigidité du moyen codeur.

Dans un mode de réalisation de l'invention, la partie de support du moyen codeur comprend un alésage assurant la retenue axiale des bagues intérieures par serrage et coopérant avec les zones de retenue des bagues intérieures.

Avantageusement, chaque bague intérieure comprend un épaulement adjacent à la zone de retenue et destiné au maintien axial de la partie de support du moyen codeur. Ainsi, lors de son montage, le moyen codeur vient en butée contre l'épaulement et ne peut pas venir au contact des éléments roulants.

Dans un autre mode de réalisation de l'invention, la partie du support du moyen codeur comprend un alésage muni d'une pluralité de nervures inclinées destinées à empêcher une séparation des deux bagues intérieures après l'assemblage du roulement, par effet d'arc-boutement.

Dans un mode de réalisation de l'invention, la partie de support du moyen codeur comprend deux lèvres en contact chacune avec une bague intérieure, sur ses extrémités axiales, de façon à définir entre le moyen codeur et les bagues intérieures, une chambre annulaire.

On obtient ainsi, grâce à l'invention, un roulement dont le codeur est capable de retenir axialement les bagues intérieures sans pouvoir venir au contact des éléments roulants lors du montage.

L'invention sera mieux comprise à l'étude de quelques modes de réalisation décrits à titre d'exemples nullement limitatifs et illustrés par les dessins annexés, sur lesquels :
la figure 1 est une vue en coupe axiale d'un moyeu de roue de véhicule équipé d'un roulement selon l'invention;
la figure 2 est une vue de détail du roulement de la figure 1;
la figure 3 est une vue partielle en coupe du codeur selon I-I;
la figure 4 est une vue partielle de dessus de la partie active du codeur de la figure 3;
la figure 5 est une vue de détail d'un roulement selon un deuxième mode de réalisation de l'invention;
la figure 6 est une vue de détail d'un roulement selon un troisième mode de réalisation de l'invention;
la figure 7 est une vue de détail d'un roulement selon un quatrième mode de réalisation de l'invention;
la figure 8 est une vue de détail d'un roulement selon un cinquième mode de réalisation de l'invention;
la figure 9 est une vue de détail d'un roulement selon un sixième mode de réalisation de l'invention;
la figure 10 est une vue partielle de côté du codeur de la figure 9; et
la figure 11 est une vue de détail d'un roulement selon un septième mode de réalisation de l'invention.

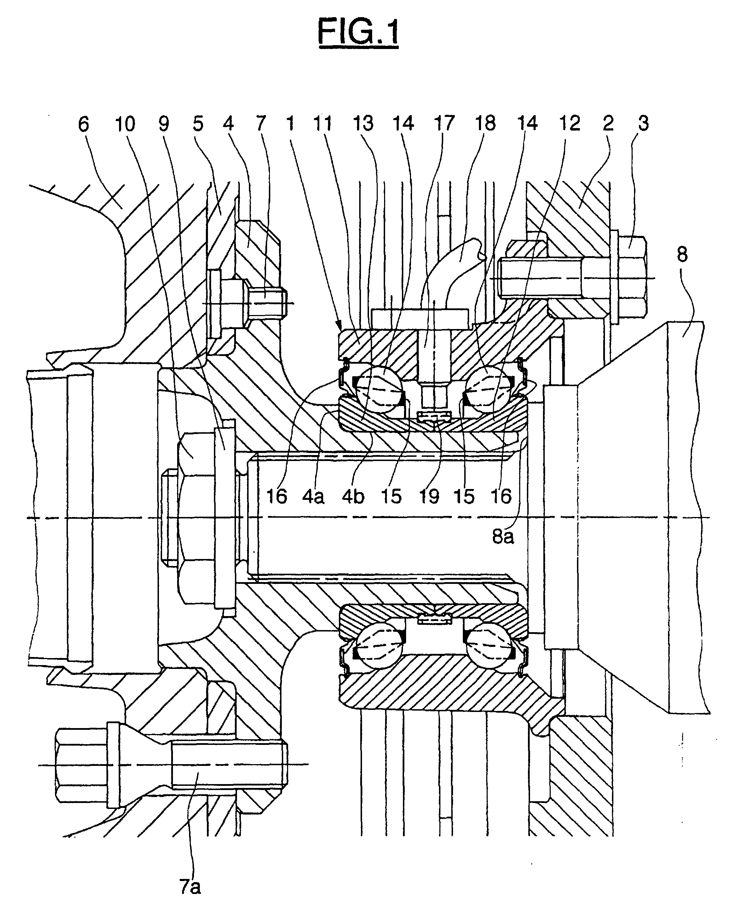

Comme illustré sur les figures 1 à 4, le roulement 1 est fixé sur le support de moyeu 2 du véhicule au moyen de vis 3. Le roulement 1 est emmanché sur une portée cylindrique 4b du moyeu de roue 4. Le disque de frein 5 et la roue 6 sont fixés au moyeu de roue 4 par plusieurs vis 7 et 7a. Le moyeu de roue 4 est monté sur l'arbre d'entraînement 8 et immobilisé par une rondelle 9 et un écrou 10. Lors du serrage de l'écrou 10, le roulement 1 est serré axialement entre une portée radiale 4a du moyeu de roue 4 et une portée radiale 8a de l'arbre d'entraînement 8.

Le roulement 1 comprend une bague extérieure fixe 11 qui est en contact avec le support de moyeu 2 du véhicule, deux bagues intérieures tournantes 12 et 13 qui sont en contact avec le moyeu de roue 4, deux rangées d'éléments roulants, par exemple des billes 14, maintenus par des cages 15, deux joints d'étanchéité 16, un capteur 17 relié à un dispositif de traitement du signal, non représenté, par un câble 18, et un codeur 19. Le capteur 17 est disposé dans un trou radial de la bague extérieure 11 et fait saillie dans l'espace annulaire limité par la bague extérieure 11, les bagues intérieures 12 et 13 et les billes 14. Le codeur 19 est fixé sur les deux bagues intérieures 12 et 13, et vient à faible distance du capteur 17.

Le codeur 19 comprend une partie active 20 en forme d'anneau, de faible épaisseur, et réalisée, par exemple, en acier magnétique, et une partie de support 21 réalisée en matériau synthétique amagnétique. La partie active 20 est percée d'une pluralité d'encoches ou fenêtres 22 séparées par des barrettes 23. La partie de support 21 du codeur 19 est munie de deux rangées de dents 24 aux extrémités axiales de sa face 21a au contact des bagues intérieures 12 et 13.

Les bagues intérieures 12 et 13 sont pourvues, à proximité de leur plan de contact 25, d'une rainure annulaire 26 formant une zone de retenue, de largeur égale à la moitié de la largeur axiale du codeur 19. Les bagues intérieures 12 et 13 sont également pourvues au fond de la rainure 26 et à proximité du plan de contact 25, c'est-à-dire de leurs surfaces frontales, d'une nervure annulaire 27 dont le bord 27a situé à proximité des dents 24 du codeur 19, est sensiblement radial afin de retenir les dents 24. Chaque rainure 26 comprend une portée d'appui 28 sur son extrémité opposée au plan de contact 25. Les portées d'appui 28 sont radiales de façon à maintenir axialement la partie de support 21 du codeur 19.

Grâce à cette disposition, la partie active 20 du codeur 19 est isolée et éloignée radialement des bagues intérieures 12 et 13, ce qui permet de réaliser ladite partie active 20 en tôle relativement fine. Avant le montage du roulement 1 sur le moyeu de roue 4, les deux bagues intérieures 12 et 13 sont retenues axialement par la coopération des dents 24 de la partie de support 21 du codeur 19 et du bord 27a de la nervure 27 des bagues intérieures 12 et 13. Le codeur 19 est positionné de façon précise en face du capteur 17, car il est maintenu axialement après montage par les portées d'appui 28 des bagues intérieures 12 et 13.

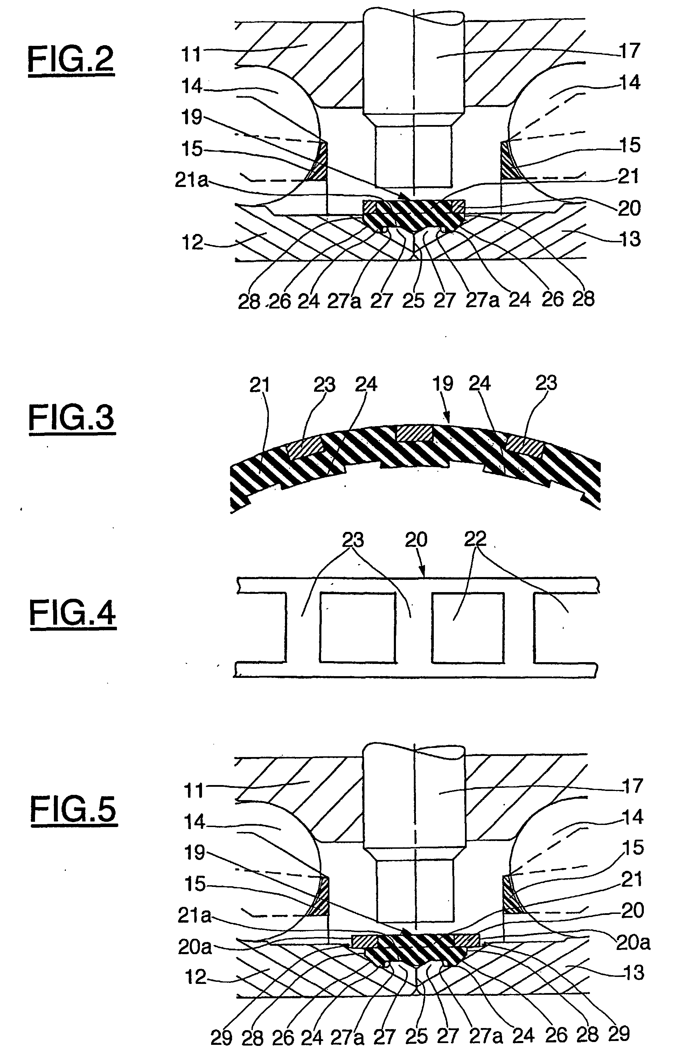

Sur la figure 5, les éléments identiques à ceux des figures précédentes portent les mêmes références. Les bagues intérieures 12 et 13 sont pourvues d'un épaulement supplémentaire 29 légèrement plus large que la moitié de la largeur axiale du codeur 19. La surface latérale 20a de la partie active 20 peut entrer en contact avec l'épaulement 29 en cas de déplacement important du codeur 19, dans le cas où les portées d'appui 28 ne sont pas suffisantes pour retenir axialement le codeur 19 et l'empêcher de venir au contact des billes 14.

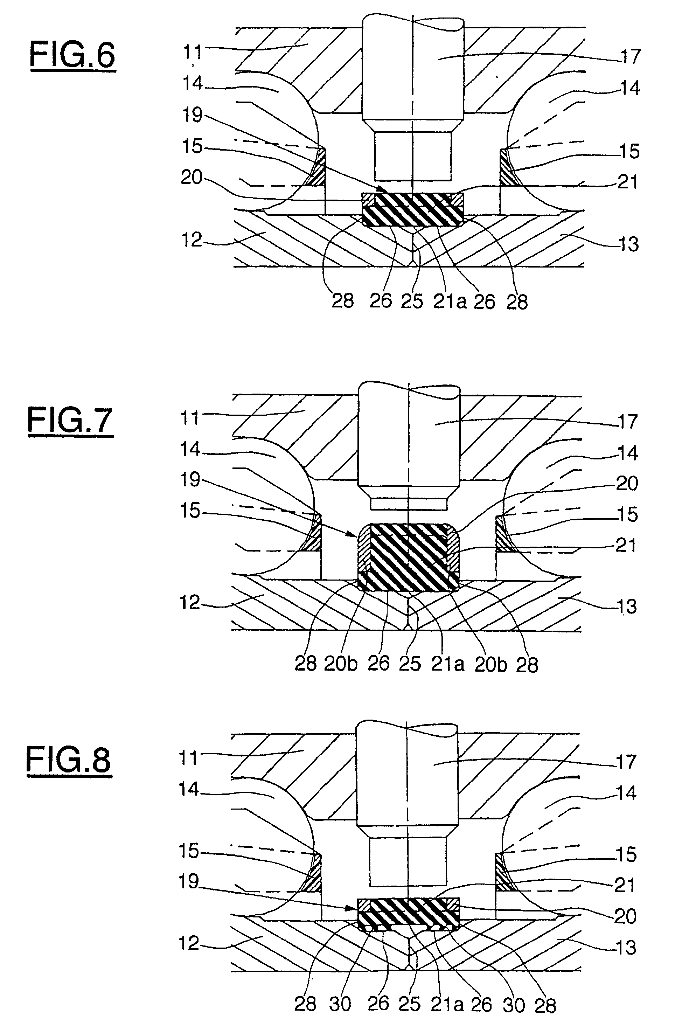

Sur la figure 6, les éléments identiques à ceux des figures précédentes portent les mêmes références. Les rainures 26 des bagues intérieures 12 et 13 sont ici dépourvues de nervures. Le fond des rainures 26 est cylindrique et se raccorde aux portées d'appui radiales 28. L'alésage 21a de la partie de support 21 du codeur 19 est cylindrique, en contact avec le fond de la rainure 26. Le maintien axial des bagues intérieures 12 et 13 avant le montage du roulement 1 sur le moyeu de roue 4 est assuré par le serrage de la partie de support 21 sur les rainures 26 qui produit un frottement suffisant. Le matériau synthétique composant la partie de support 21 est alors choisi pour présenter un coefficient de frottement élevé.

Sur la figure 7, les éléments identiques à ceux des figures précédentes portent les mêmes références. La partie active 20 du codeur 19 est pourvue d'une section en U, la portion centrale du U étant en regard du capteur 17 et les branches latérales 20b du U entourent axialement la partie de support 21 du codeur 19. La partie active 20 ainsi réalisée est extrêmement rigide et présente un faux rond réduit, ce qui augmente la précision du signal dans le capteur 17.

Sur la figure 8, les éléments identiques à ceux des figures précédentes portent les mêmes références. La partie de support 21 du codeur 19 est pourvue sur son alésage 21a, de plusieurs nervures annulaires 30 en appui sur le fond des rainures 26. Les nervures 30 sont inclinées vers le plan de contact 25, de façon à exercer un effort de retenue par effet d'arc-boutement si les bagues intérieures 12 et 13 tendent à se séparer. Les nervures 30 sont de hauteur inférieure à la profondeur de la rainure 26. La partie de support 21 est ainsi en contact axial avec les portées d'appui radiales 28 qui forment un épaulement empêchant un mouvement axial du codeur 19 après le montage du roulement 1 sur le moyeu de roue 4.

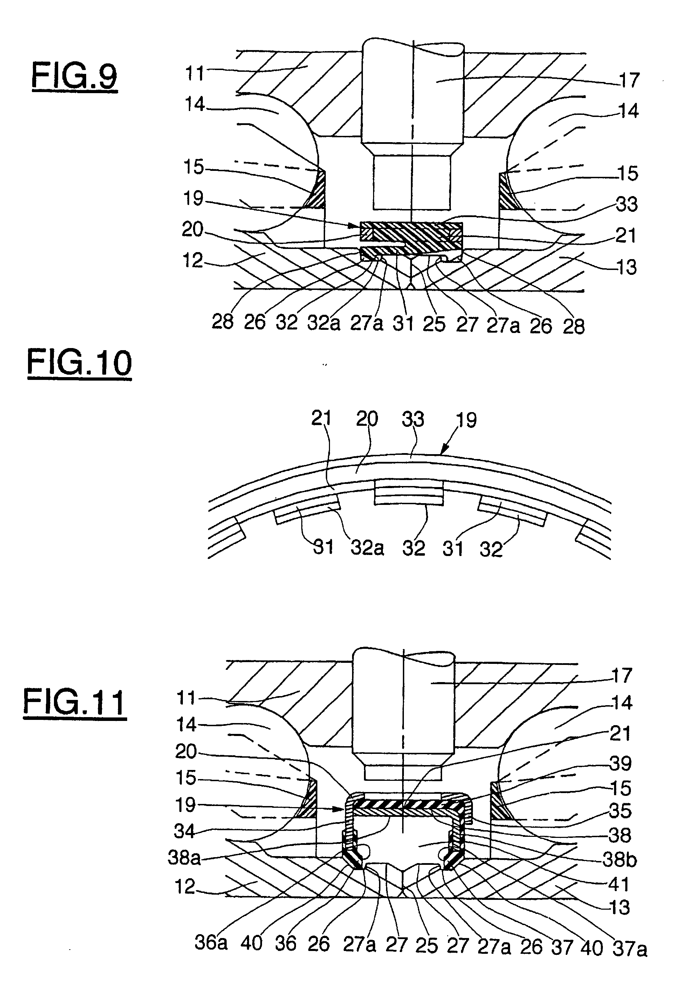

Sur les figures 9 et 10, les éléments identiques à ceux des figures précédentes portent les mêmes références. La partie de support 21 du codeur 19 comprend sur son alésage, des pattes 31 allongées axialement et qui se terminent à leurs extrémités libres par des protubérances 32 dans les rainures 26. Les pattes 31 sont alternées de façon à ce que lorsqu'une patte 31 est en contact avec la bague intérieure 12, la patte 31 suivante dans le sens circonférientiel soit en contact avec la bague intérieure 13. Les protubérances 32 des pattes 31 sont munies d'une portion radiale 32a faisant face au bord radial 27a des nervures 27 et capable d'entrer en contact avec les bords 27a des nervures 27 si les bagues intérieures 12 et 13 tendent à se séparer. La partie active 20 du codeur 19 est recouverte par une couche 33 de la matière synthétique formant la partie de support 21, ce qui permet de protéger efficacement la partie active 20.

Sur la figure 11, les éléments identiques à ceux des figures précédentes portent les mêmes références. La partie active 20 du codeur 19 est munie d'une section en U à branches inégales. La première branche 34 porte à son extrémité libre une lèvre d'appui 36 en contact avec la rainure 26 de la bague intérieure 13. La lèvre d'appui 36 est réalisée en matériau souple surmoulé sur l'extrémité de la branche 34. La deuxième branche 35 plus courte que la branche 34 maintient la partie de support 21 entre les branches 34 et 35. La partie de support 21 comprend un élément annulaire supplémentaire 38 réalisé en matériau amagnétique, à section en L et un élément souple 39 surmoulé sur l'élément annulaire supplémentaire 38. L'élément annulaire supplémentaire 38 comprend une branche 38a cylindrique dont l'extrémité libre est au contact de la branche 34 de la partie active 20, et dont l'autre extrémité se raccorde à la portion radiale 38b dont l'extrémité porte une lèvre d'appui 37 en contact avec la bague intérieure 12 au fond de la rainure 26. L'élément souple 39 est surmoulé sur l'élément annulaire supplémentaire 38 et sépare celui-ci de la partie active 20 du codeur 19, sauf à l'extrémité libre de la portion cylindrique 38a de l'élément annulaire supplémentaire 38. Les deux lèvres d'appui 36 et 37 comprennent chacune une portion radiale 36a, 37a faisant face au bord 27a de la nervure 27 et capable de venir en contact du bord 27a si les bagues intérieures 12 et 13 tendent à se séparer. Les portées d'appui 40 des rainures 26 des bagues intérieures 12 et 13 sont obliques et empêchent le codeur 19 de venir au contact des billes 14 lors de l'assemblage des bagues intérieures 12 et 13. Le codeur 19 et les bagues intérieures 12 et 13 définissent une chambre annulaire 41.

Ainsi réalisée, la partie active 20 du codeur 19 est suffisamment éloignée des bagues intérieures 12 et 13 pour fournir dans le capteur 17 un signal de bonne qualité et présente des qualités de rigidité dues à sa section en U et à la présence de l'élément annulaire supplémentaire 38.

Grâce à l'invention, le codeur assure la solidarisation axiale des bagues intérieures du roulement après leur assemblage et ne peut pas venir au contact des éléments roulants durant ladite opération d'assemblage.

## Revendications

1. Roulement (1) comprenant au moins une bague extérieure (11), deux bagues intérieures (12,13), deux rangées d'éléments roulants (14) maintenus par des cages (15) et un dispositif intégré de détection de la vitesse de rotation, du type comprenant un moyen capteur (17) et un moyen codeur (19) disposés dans la chambre annulaire définie entre les bagues intérieures et extérieure et les éléments roulants, le moyen codeur (19) comprenant une partie active (20) capable de créer dans le moyen capteur (17) un signal périodique de fréquence proportionnelle à la vitesse de rotation du roulement (1), **caractérisé en ce que** le moyen codeur (19) comprend une partie de support (21) solidaire des bagues intérieures (12,13) et isolant magnetiquement les bagues interieures (12,13) de la partie active (20) du codeur (19), réalisée en matériau amagnétique, et munie de moyens de retenue axiale des bagues intérieures (12,13) l'une contre l'autre avant montage du roulement (1) dans l'ensemble mécanique auquel il est destiné, la partie active (20) étant réalisée à partir de tôle d'acier magnétique.

2. Roulement selon la revendication 1, **caractérisé en ce que** les éléments roulants (14) sont des billes.

3. Roulement selon l'une quelconque des revendications précédentes, **caractérisé en ce que** les bagues intérieures (12,13) comprennent des zones de retenue coopérant avec la partie de support (21) du moyen codeur (19).

4. Roulement selon l'une quelconque des revendications précédentes, **caractérisé en ce que** la partie de support (21) du moyen codeur (19) comprend des moyens de retenue axiale capables de coopérer avec une rainure annulaire (26) prévue sur chaque bague intérieure (12,13) du roulement (1).

5. Roulement selon la revendication 4, **caractérisé en ce que** les moyens de retenue sont disposés aux extrémités axiales de la partie de support (21) du moyen codeur (19).

6. Roulement selon l'une quelconque des revendications 4 ou 5, **caractérisé en ce que** les moyens de retenue comprennent chacun une rangée de dents (24) ou une nervure annulaire.

7. Roulement selon l'une quelconque des revendications 4 à 6, **caractérisé en ce que** chaque bague intérieure (12,13) comprend une nervure annulaire (27) disposée au fond de la rainure (26), à proximité de la surface frontale de la bague, pourvue d'une portion (27a) sensiblement radiale sur sa face opposée à la surface frontale de la bague, capable de coopérer avec les moyens de retenue de la partie de support (21) du moyen codeur (19).

8. Roulement selon l'une quelconque des revendications 4 à 7, **caractérisé en ce que** chaque rainure annulaire (26) d'une bague intérieure (12,13) comprend une portée d'appui (28) disposée entre le fond de la rainure (26) et le bord de la rainure (26) proche des éléments roulants (14) de façon à former une butée axiale du moyen codeur (19) lors de la mise en place de la deuxième bague intérieure (13) au contact de la première bague intérieure (12) et du moyen codeur (19).

9. Roulement selon la revendication 8, **caractérisé en ce que** les bagues intérieures (12,13) comprennent un épaulement supplémentaire (29) sur le bord de la rainure (26) proche des éléments roulants (14), destiné à coopérer avec une portion radiale (20a) de la partie active (20) du moyen codeur (19).

10. Roulement selon l'une quelconque des revendications 4 ou 5, **caractérisé en ce que** les moyens de retenue axiale de la partie de support (21) du moyen codeur (19) comprennent des pattes élastiques (31) orientées axialement, alternées et munies à chacune de leurs extrémités libres d'une protubérance (32) destinée à coopérer avec les rainures annulaires (26) des bagues intérieures (12,13).

11. Roulement selon la revendication 10, **caractérisé en ce que** la partie active (20) du moyen codeur (19) est recouverte par la matière synthétique de la partie de support (21).

12. Roulement selon la revendication 4, **caractérisé en ce que** la partie active (20) du moyen codeur (19) est munie d'une section en U, les branches latérales (20b) du U entourant axialement la partie de support (21) du moyen codeur (19) et la portion centrale du U étant disposée en face du moyen capteur (17).

13. Roulement selon la revendication 12, **caractérisé en ce que** le moyen codeur (19) comprend un élément annulaire supplémentaire (38), à section en L, disposé à l'intérieur de la partie active (20) à section en U et réalisé en matériau amagnétique, comprenant une branche radiale (38b) et une branche axiale (38a) disposée entre la portion centrale de la partie active (20) du moyen codeur (19) et les bagues intérieures (12,13) et séparée de la portion centrale de la partie active (20) par une couche d'élastomère surmoulé, ledit élément annulaire supplémentaire (38) étant destiné à améliorer la qualité du signal dans le moyen capteur (17) et la rigidité du moyen codeur (19).

14. Roulement selon la revendication 3, **caractérisé en ce que** la partie de support (21) du moyen codeur (19) comprend un alésage assurant la retenue axiale des bagues intérieures (12,13) par serrage et coopérant avec les zones de retenue des bagues intérieures (12,13).

15. Roulement selon la revendication 14, **caractérisé en ce que** chaque bague intérieure (12,13) comprend un épaulement adjacent à la zone de retenue et destiné au maintien axial de la partie de support (21) du moyen codeur (19).

16. Roulement selon l'une quelconque des revendications 1 à 3, **caractérisé en ce que** la partie de support (21) du moyen codeur (19) comprend un alésage muni d'une pluralité de nervures (30) inclinées destinées à empêcher une séparation des deux bagues intérieures (12,13) après l'assemblage du roulement (1), par effet d'arc-boutement.

17. Roulement selon l'une quelconque des revendications précédentes, **caractérisé en ce que** la partie de support (21) du moyen codeur (19) comprend deux lèvres (36,37) en contact chacune avec une bague intérieure (12,13), sur ses extrémités axiales, de façon à définir entre ledit moyen codeur (19) et lesdites bagues intérieures (12,13) une chambre annulaire (41).

## Claims

1. Rolling-contact bearing (1) comprising at least one outer race (11), two inner races (12,13), two rows of rolling bodies (14) held in cages (15) and a built-in device for detecting the speed of rotation, of the type comprising a sensor means (17) and an encoder means (19) which are located in the annular chamber defined between the inner races and outer race and the rolling bodies, the encoder means (19) comprising an active part (20) capable of creating in the sensor means (17) a periodic signal of frequency proportional to the rotational speed of the bearing (1), **characterized in that** the encoder means (19) comprises a support part (21) secured to the inner races (12,13) and made of a nonmagnetic material, and equipped with means for axially holding the inner races (12,13) against each other before the bearing (1) is mounted in the mechanical assembly for which it is intended, the active part (20) being made from magnetic steel sheet.

2. Rolling-contact bearing according to Claim 1, **characterized in that** the rolling bodies (14) are balls.

3. Rolling-contact bearing according to either one of the preceding claims, **characterized in that** the inner races (12,13) comprise holding regions which interact with the support part (21) of the encoder means (19).

4. Rolling-contact bearing according to any one of the preceding claims, **characterized in that** the support part (21) of the encoder means (19) comprises means for axial holding which are capable of interacting with an annular slot (26) made on each inner race (12,13) of the bearing (1).

5. Rolling-contact bearing according to Claim 4, **characterized in that** the holding means are arranged at the axial ends of the support part (21) of the encoder means (19).

6. Rolling-contact bearing according to either one of Claims 4 and 5, **characterized in that** the holding means each comprise a row of teeth (24) or an annular rib.

7. Rolling-contact bearing according to any one of Claims 4 to 6, **characterized in that** each inner race (12,13) comprises an annular rib (27) arranged at the bottom of the slot (26) close to the front surface of the race and provided with a substantially radial portion (27a) on its face opposite the front surface of the race, capable of interacting with the holding means of the support part (21) of the encoder means (19).

8. Rolling-contact bearing according to any one of Claims 4 to 7, **characterized in that** each annular slot (26) of an inner race (12,13) comprises a bearing surface (28) arranged between the bottom of the slot (26) and the edge of the slot (26) close to the rolling bodies (14) so as to form an axial stop for the encoder means (19) when the second inner race (13) is put in place in contact with the first inner race (12) and encoder means (19).

9. Rolling-contact bearing according to Claim 8, **characterized in that** the inner races (12,13) comprise an additional shoulder (29) on the edge of the slot (26) close to the rolling bodies (14), this shoulder being intended to interact with a radial portion (20a) of the active part (20) of the encoder means (19).

10. Rolling-contact bearing according to either one of Claims 4 and 5, **characterized in that** the means for axially holding the support part (21) of the encoder means (19) comprise elastic tabs (31) directed axially, alternating and equipped at each of their free ends with a projection (32) intended to interact with the annular slots (26) in the inner races (12,13).

11. Rolling-contact bearing according to Claim 10, **characterized in that** the active part (20) of the encoder means (19) is covered with the synthetic material of the support part (21).

12. Rolling-contact bearing according to Claim 4, **characterized in that** the active part (20) of the encoder means (19) has a U section, the lateral legs (20b) of the U axially surrounding the support part (21) of the encoder means (19) and the central portion of the U being arranged facing the sensor means (17).

13. Rolling-contact bearing according to Claim 12, **characterized in that** the encoder means (19) comprises an additional annular element (38) with an L section arranged inside the active part (20) of U section and made of a non-magnetic material, comprising a radial leg (38b) and an axial leg (38a) arranged between the central portion of the active part (20) of the encoder means (19) and the inner races (12,13) and separated from the central portion of the active part (20) by an overmoulded elastomer layer, the said additional annular element (38) being intended to improve the quality of the signal in the sensor means (17) and the rigidity of the encoder means (19).

14. Rolling-contact bearing according to Claim 3, **characterized in that** the support part (21) of the encoder means (19) comprises a bore which axially holds the inner races (12,13) by clamping them and interacts with the holding regions of the inner races (12,13).

15. Rolling-contact bearing according to Claim 14, **characterized in that** each inner race (12,13) comprises a shoulder adjacent to the holding region and intended for axially securing the support part (21) of the encoder means (19).

16. Rolling-contact bearing according to any one of Claims 1 to 3, **characterized in that** the support part (21) of the encoder means (19) comprises a bore equipped with a plurality of inclined ribs (30) intended to prevent the two inner races (12,13) from separating after the bearing (1) has been assembled, by a bracing effect.

17. Rolling-contact bearing according to any one of the preceding claims, **characterized in that** the support part (21) of the encoder means (19) comprises two lips (36,37), each one in contact with an inner race (12,13), on its axial ends, so as to define an annular chamber (41) between the said encoder means (19) and the said inner races (12,13).

## Patentansprüche

1. Wälzlager (1), zu dem wenigstens ein Außenring (11), zwei Innenringe (12, 13), zwei Reihen von Wälzkörpern (14), die durch Käfige (15) gehalten sind, und eine integrierte Drehzahlerfassungsvorrichtung der Bauart gehören, die ein Signalaufnehmermittel (17) und ein Impulsgebermittel (19) aufweist, die in der zwischen den Innenringen und dem Außenring sowie den Wälzkörpern definierten Ringkammer angeordnet sind, wobei das Impulsgebermittel (19) einen aktiven Teil (20) aufweist, der in der Lage ist, in dem Signalaufnehmermittel (17) ein periodisches Signal zu erzeugen, dessen Frequenz proportional zu der Rotationsgeschwindigkeit des Wälzlagers (1) ist, **dadurch gekennzeichnet, dass** das Impulsgebermittel (19) einen Trägerteil (21) enthält, der mit den Innenringen (12,13) verbunden ist und die Innenringe (12,13) von dem aktiven Teil (20) des Impulsgebers (19) magnetisch isoliert, aus einem nichtmagnetischem Material hergestellt und mit Haltemitteln versehen ist, um die Innenringe (12,13) vor der Montage des Wälzlagers (1) in der mechanischen Baugruppe, für die das Wälzlager bestimmt ist, in axialer Richtung aneinander zu halten, wobei der aktive Teil (20) aus magnetischem Stahlblech hergestellt ist.

2. Wälzlager nach Anspruch 1, **dadurch gekennzeichnet, dass** die Wälzkörper (14) Kugeln sind.

3. Wälzlager nach einem der vorhergehenden Ansprüche, **dadurch gekennzeichnet, dass** die Innenringe (12,13) Haltebereiche aufweisen, die mit dem Trägerteil (21) des Impulsgebermittels (19) zusammenwirken.

4. Wälzlager nach einem der vorhergehenden Ansprüche, **dadurch gekennzeichnet, dass** der Trägerteil (21) des Impulsgebermittels (19) axiale Haltemittel enthält, die geeignet sind, um mit einer ringförmigen Nut (26) zusammenzuwirken, die auf jedem Innenring (12,13) des Wälzlagers (1) vorgesehen ist.

5. Wälzlager nach Anspruch 4, **dadurch gekennzeichnet, dass** die Haltemittel an den axialen Enden des Trägerteils (21) des Impulsgebermittels (19) angeordnet sind.

6. Wälzlager nach einem der Ansprüche 4 oder 5, **dadurch gekennzeichnet, dass** die Haltemittel jeweils eine Reihe von Zähnen (24) oder je eine ringförmige Rippe aufweisen.

7. Wälzlager nach einem der Ansprüche 4 bis 6, **dadurch gekennzeichnet, dass** jeder der Innenringe (12,13) eine ringförmige Rippe (27) aufweist, die auf dem Grund der Nut (26), in der Nähe der Stirnseite des Rings angeordnet und auf ihrer der Stirnseite des Rings abgewandten Fläche mit einem weitgehend radialen Abschnitt (27a) ausgebildet ist, der dazu dient, mit den Haltemitteln des Trägerteils (21) des Impulsgebermittels (19) zusammenzuwirken.

8. Wälzlager nach einem der Ansprüche 4 bis 7, **dadurch gekennzeichnet, dass** jede ringförmige Nut (26) der Innenringe (12,13) eine Anlagefläche (28) aufweist, die zwischen dem Grund der Nut (26) und dem den Wälzkörpern (14) benachbarten Rand der Ringnut (26) derart angeordnet ist, dass sie dem Impulsgebermittel (19) als axiales Widerlager dient, sobald der zweite Innenring (13) mit dem ersten Innenring (12) und dem Impulsgebermittel (19) in Berührung gebracht wird.

9. Wälzlager nach Anspruch 8, **dadurch gekennzeichnet, dass** die Innenringe (12,13) an dem Rand der Ringnut (26) nahe bei den Wälzkörpern (14) eine zusätzliche Schulter (29) aufweisen, die dazu dient, mit einem radialen Abschnitt (20a) des aktiven Teils (20) des Impulsgebermittels (19) zusammenzuwirken.

10. Wälzlager nach einem der Ansprüche 4 oder 5, **dadurch gekennzeichnet, dass** die axialen Haltemittel des Trägerteils (21) des Impulsgebermittels (19) in axialer Richtung wechselnd ausgerichtete elastische Zungen (31) aufweisen, die an sämtlichen ihrer freien Enden mit einem Vorsprung (32) versehen sind, der dazu bestimmt ist, mit den ringförmigen Nuten (26) der Innenringe (12,13) zusammenzuwirken.

11. Wälzlager nach Anspruch 10, **dadurch gekennzeichnet, dass** der aktive Teil (20) des Impulsgebermittels (19) mit dem Kunststoff des Trägerteils (21) bedeckt ist.

12. Wälzlager nach Anspruch 4, **dadurch gekennzeichnet, dass** der aktive Teil (20) des Impulsgebermittels (19) mit einem U-förmigen Querschnitt ausgebildet ist, wobei die seitlichen Schenkel (20b) des U den Trägerteil (21) des Impulsgebermittels (19) in axialer Richtung einfassen und der mittlere Abschnitt des U gegenüber dem Signalaufnehmermittel (17) angeordnet ist.

13. Wälzlager nach Anspruch 12, **dadurch gekennzeichnet, dass** das Impulsgebermittel (19) ein zusätzliches, aus nichtmagnetischem Material hergestelltes ringförmiges Element (38) mit L-förmigem Querschnitt enthält, das im Inneren des aktiven Teils (20) mit U-förmigem Querschnitt angeordnet ist, aus einem nichtmagnetischen Material gefertigt ist und einen radialen Ast (38b) sowie einen axialen Ast (38a) aufweist, der zwischen dem mittleren Abschnitt des aktiven Teils (20) des Impulsgebermittels (19) und den Innenringen (12,13) angeordnet ist und durch eine angeformte Elastomerbeschichtung von dem mittleren Abschnitt des aktiven Teils (20) getrennt ist, wobei das zusätzliche ringförmige Element (38) dazu dient, die Qualität des Signals in dem Signalaufnehmermittel (17) zu verbessern und die Steifigkeit des Impulsgebermittels (19) zu erhöhen.

14. Wälzlager nach Anspruch 3, **dadurch gekennzeichnet, dass** der Trägerteil (21) des Impulsgebermittels (19) eine Bohrung aufweist, die durch Klemmung für den axialen Halt der Innenringe (12,13) sorgt und die mit den Haltebereichen der Innenringe (12,13) zusammenwirkt.

15. Wälzlager nach Anspruch 14, **dadurch gekennzeichnet, dass** jeder der Innenringe (12,13) benachbart zu dem Haltebereich eine Schulter aufweist, die dem axialen Halt des Trägerteils (21) des Impulsgebermittels (19) dient.

16. Wälzlager nach einem der Ansprüche 1 bis 3, **dadurch gekennzeichnet, dass** der Trägerteil (21) des Impulsgebermittels (19) eine Bohrung aufweist, die mit einer Vielzahl von schrägen Rippen (30) versehen ist, die dazu dienen, durch Aufbäumen eine Trennung der beiden Innenringe (12,13) nach dem Zusammenbau des Wälzlagers (1) zu verhindern.

17. Wälzlager nach einem der vorhergehenden Ansprüche, **dadurch gekennzeichnet, dass** der Trägerteil (21) des Impulsgebermittels (19) zwei Lippen (36,37) aufweist, die an deren axialen Enden jeweils mit einem der Innenringe (12,13) derart in Berührung stehen, um zwischen dem Impulsgebermittel (19) und den Innenringen (12,13) eine Ringkammer (41) zu bilden.
